Europäisches Patentamt

European Patent Office

Office européen des brevets

(11) Publication number: **0 184 874**
**B1**

(12) **EUROPEAN PATENT SPECIFICATION**

(45) Date of publication of patent specification: **18.04.90**

(51) Int. Cl.⁵: **G 02 B 6/44**

(21) Application number: **85201891.0**

(22) Date of filing: **19.11.85**

(54) Assembly including an optical fibre secured in a wall.

(30) Priority: **05.12.84 NL 8403692**

(43) Date of publication of application:
**18.06.86 Bulletin 86/25**

(45) Publication of the grant of the patent:
**18.04.90 Bulletin 90/16**

(84) Designated Contracting States:
**DE FR GB SE**

(56) References cited:
**FR-A-2 435 845**
**GB-A-2 057 936**
**GB-A-2 111 243**
**US-A-2 325 621**

(73) Proprietor: **N.V. Philips' Gloeilampenfabrieken**
**Groenewoudseweg 1**
**NL-5621 BA Eindhoven (NL)**

(72) Inventor: **Smulders, Henricus Willibrordus**
**Wilhelmus**
**c/o INT. OCTROOIBUREAU B.V. Prof. Holstlaan 6**
**NL-5656 AA Eindhoven (NL)**

(74) Representative: **Veenstra, Gustaaf et al**
**INTERNATIONAAL OCTROOIBUREAU B.V. Prof.**
**Holstlaan 6**
**NL-5656 AA Eindhoven (NL)**

## Description

The invention relates to an assembly which includes a wall in which an end portion of an optical fibre which is enclosed by a tubular envelope is secured.

The wall may form part of, for example, a housing of a connector for connecting the optical fibre to other optical elements or of another device whereto the optical fibre is to be connected. It is desirable that the tubular envelope can be mounted in the wall in a simple manner; in many cases it is also important that the assembly can be simply removed again, for example when maintenance, modifications or repairs are required after some time.

It is an object of the invention to provide a construction which allows for the envelope to be secured in the wall and removed therefrom in a very easy manner.

To achieve this, the assembly in accordance with the invention is characterized in that the tubular envelope is accommodated with a clearance in a holder which is shaped as a hollow cylinder and which projects through an opening in the wall, which holder is rotatable within the assembly about its longitudinal axis and is provided with a circumferential groove on its outer cylinder surface, the depth of said groove in two diametrically situated portions being equal to the wall thickness of the holder so that in the wall of the holder there are formed two elongate openings whose longitudinal direction extends in the circumferential direction, the outer surface of the tubular envelope also being provided with a circumferential groove whose axial position, in use, is coplanar with that of the circumferential groove in the holder, a substantially U-shaped spring proportioned so that, in its relaxed state, the distance between the legs is smaller than the diameter of the tubular envelope at the area of the envelopes circumferential groove and being attached to the wall so that its legs are situated in the circumferential groove of the holder whereby in one rotational orientation of the holder the legs can extend along and through the elongate openings with spring's legs pressing into the circumferential groove of the envelope and in another orientation the legs are not adjacent the elongated openings and do not engage the tubular envelope.

The legs of the spring retain the envelope in the holder. When the holder is rotated through 90° about its axis, the legs will be situated in portions of the circumferential groove of the holder which have not been recessed so far that they form openings, with the result that the legs are lifted out of the circumferential groove of the envelope so that the envelope can be simply pulled out of the holder.

In order to facilitate rotation of the holder, a preferred embodiment of the assembly in accordance with the invention is characterized in that the holder is provided with a non-round portion which projects from the wall. For example, the non-round portion may be provided with a profile which can be engaged by a tool or with a protrusion which enables manipulation by hand.

US 2,325,621 discloses an insulator which is attached to a frame by means of a screw-threaded portion and a clip.

The invention will be described in detail hereinafter with reference to the drawing. Therein:

Figure 1 is partly a longitudinal sectional view and partly a side elevation of a first embodiment of an assembly in accordance with the invention,

Figure 2 is partly a side elevation and partly a longitudinal sectional view, taken along the line II—II in Figure 1, of a part of the assembly shown in Figure 1,

Figure 3 is a cross-sectional view taken along the line III—III in Figure 2, and

Figure 4 is a cross-sectional view, corresponding to that shown in Figure 3, of a second embodiment.

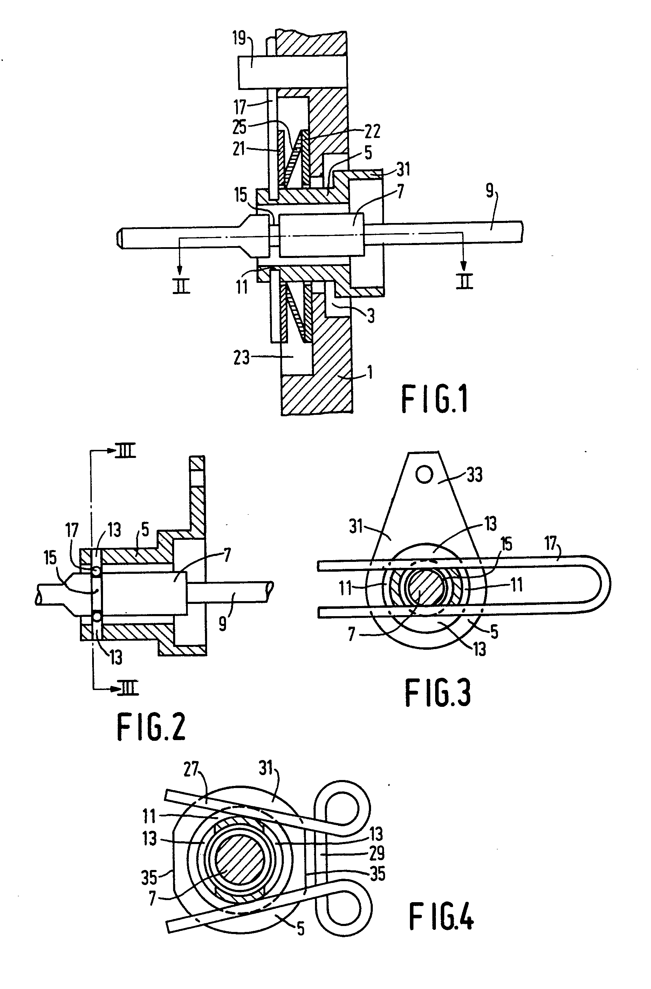

Figure 1 shows a portion of a wall 1 which forms part of a housing, for example, a connector housing. In the wall 1 there is formed a round opening 3 wherethrough a holder 5 projects. The holder 5 is formed as a hollow cylinder and is rotatable about its longitudinal axis in the opening 3. The holder 5 accommodates a tubular envelope 7 with some clearance, an end portion of an optical fibre 9 being secured in said envelope. On the outer cylinder surface of the holder 5 there is provided a circumferential groove which has a depth in two diametrically situated portions which is greater than the wall thickness of the holder. Consequently, these portions form two elongate openings 13 in the wall of the holder 5, the longitudinal direction of said openings extending in the circumferential direction (see also Figures 2 and 3). The outer surface of the tubular envelope 7 of the optical fibre 9 is also provided with a circumferential groove 15. The envelope 7 is arranged in the holder 5 so that the axial positions of the circumferential grooves 11 and 15 coincide.

To the wall 1 there is also attached an essentially U-shaped spring 17, for example by means of a pin 19 which projects from the wall. The legs of the spring 17 are arranged in the circumferential groove 11 of the holder 5, that is to say at the area of the elongate openings 13. The spring 17 is proportioned so that when they are not retained, the distance between the legs is smaller than the diameter of the tubular envelope 7 at the area of the circumferential groove 15 provided therein. Consequently, the spring force presses the legs into the circumferential groove 15 of the envelope through the openings 13. The spring 17 thus retains the envelope 7 in the holder 5. Because the legs of the spring 17 are also arranged in the circumferential groove 11 of the holder 5, this holder is also retained in the axial direction by the spring. The holder 5 is also inserted through two rings 21 and 22 which are accommodated in a chamber 23 recessed in the wall 1. Between the rings 21 and 22 there is arranged a conical, resilient ring 25 so that the spring 17, the holder 5 and the envelope 7 have some freedom of movement in the axial direction. This is important, for example in connectors in order to allow for compensation for tolerances.

The spring 17 of the embodiment shown in the Figures 1 to 3 is substantially truly U-shaped. In order to avoid excessive rigidity of the legs, the spring must be comparatively long. When preference is given to a spring having a smaller length, another spring construction can be chosen, for example, as shown in Figure 4. The spring 27 shown therein is again essentially U-shaped, but at the area of the transition between the base and the legs it is bent through an angle of 270° instead of 90° as in the case of the spring 17. Thus, equally flexible legs are obtained even though the length of the spring is smaller. The width, however, is slightly larger and the thickness (the dimension in the axial direction) is doubled. The spring 27 can be secured to the wall 1, for example by pressing the straight portion 29 of the base into a groove in the wall (not shown).

When the holder 5 is rotated approximately 90° about its longitudinal axis, the legs of the spring 17, 27 engage the bottom of the groove 11 because the openings 13 are turned away and the spring cannot rotate together with the holder because it is secured to the wall 1 near its base. The legs of the spring 17, 27 are thus pressed apart as shown in Figure 4. Consequently, the legs are lifted out of the circumferential groove 15 in the tubular envelope 7 of the optical fibre 9. As a result, the envelope will be loosely disposed in the holder 5 so that it can be easily pulled out of the holder. When the envelope 7 is to be mounted in the holder 5, the holder is first moved to the position in which it has been rotated through 90° as shown in Figure 4, after which the envelope is slid into the holder so far that the axial position of its circumferential groove 15 coincides with that of the circumferential groove 11 of the holder. Subsequently, the holder 5 is rotated through 90° again so that the legs of the spring 17, 27 are forced into the circumferential groove 15 of the envelope 7 *via* the openings 13. It is alternatively possible to slide the envelope 7 into the holder 5 so far that its circumferential groove 15 is situated beyond the circumferential groove 11 of the holder. After rotation of the holder 5, the legs of the spring 17, 27 will then rest on the outer surface of the envelope 7. When the envelope 7 is subsequently pulled back slightly, the legs of the spring 17, 21 will be automatically forced into the circumferential groove 15.

In order to facilitate rotation of the holder 5, the holder is preferably provided with a non-round portion 31 which projects from the wall 1. As is shown in Figure 3, this portion may be provided with a protrusion 33 which enables rotation of the holder 5 by hand. Another possibility consists in providing the non-round portion 31 with a profile which can be engaged by a tool (for example, a spanner). Such a profile may consist of, for example two parallel surfaces 35 which are situated one opposite the other (see Figure 4).

## Claims

1. An assembly which includes a wall (1) in which an end portion of an optical fibre (9) which is enclosed by a tubular envelope (7) is secured, characterized in that the tubular envelope (7) is accommodated with a clearance in a holder (5) which is shaped as a hollow cylinder and which projects through an opening (3) in the wall (1), which holder (5) is rotatable within the assembly about its longitudinal axis and is provided with a circumferential groove (11) on its outer cylinder surface, the depth of said groove in two diametrically situated portions being equal to the wall thickness of the holder (5) so that in the wall of the holder there are formed two elongate openings (13) whose longitudinal direction extends in the circumferential direction, the outer surface of the tubular envelope (7) also being provided with a circumferential groove (15) whose axial position, in use, is coplanar with that of the circumferential groove (11) in the holder (5), a substantially U-shaped spring (17, 27) proportioned so that, in its relaxed state, the distance between the legs is smaller than the diameter of the tubular envelope at the area of the envelope's circumferential groove (15) and being attached to the wall (1) so that its legs are situated in the circumferential groove (11) of the holder (5) whereby in one rotational orientation of the holder (5) the legs can extend along and through the elongate openings with spring's legs pressing into the circumferential groove (15) of the envelope (7) and in another orientation the legs are not adjacent the elongated openings and do not engage the tubular envelope (7).

2. An assembly as claimed in Claim 1, characterized in that the holder (5) is provided with a non-round portion (31) which projects from the wall (1).

## Patentansprüche

1. Montage mit einer Wand (1), in der ein von einer zylindrischen Hülle (7) umgebener Endteil einer optischen Faser (9) befestigt ist, dadurch gekennzeichnet, daß die zylindrische Hülle (7) mit einigem Spielraum in einer Halterung (5) angeordnet ist, die die Form eines Hohlzylinders hat, durch eine Öffnung (3) in der Gerätewand (1) hervortritt, in der Montage um ihre Längsachse drehbar und an ihrer äußeren Zylinderfläche mit einer Umfangsnut (11) versehen ist, wobei die Tiefe der Nut in zwei einander diametral gegenüberliegenden Teilen gleich der Wanddicke der Halterung (5) ist, so daß in der Wand der Halterung zwei längliche Öffnungen (13) gebildet werden, deren Längsrichtung sich in der Umfangsrichtung erstreckt, wobei die Außenfläche der zylindrischen Hülle (7) ebenfalls mit einer Umfangsnut (15) versehen ist, deren Axiallage bei der Benutzung der der Umfangsnut (11) in der Halterung (5) koplanar ist, eine im wesentlichen U-förmige Feder (17, 27) derart bemessen ist, daß im entspannten Zustand der Abstand zwischen den Schenkeln kleiner ist als der Durchmesser der zylindrischen Hülle im Bereich der Umfangsnut (15) der Hülle und derart in der Wand (1) befestigt wird, daß ihre Schenkel sich in der Umfangsnut (11) der Halterung (5) befinden, wobei in einer Drehrichtung der Halterung (5) die Schenkel sich längs der länglichen Öffnungen und durch diese Öffnungen erstrecken, wobei die Schenkel der Feder in die Umfangsnut (15) der Hülle (7) drükken, und in einer anderen Orientierung die Schenkel sich nicht neben den länglichen Öffnungen befinden und nicht in der zylindrischen Hülle (7) rasten.

2. Montage nach Anspruch 1, dadurch gekennzeichnet, daß die Halterung (5) mit einem unrunden Teil (31) versehen ist, der aus der Gerätewand (1) hervortritt.

**Revendications**

1. Montage comportant une paroi (1) dans laquelle est fixée une partie terminale d'une fibre optique (9), entourée d'une enveloppe tubulaire (7), caractérisé en ce que l'enveloppe tubulaire (7) en tenant compte d'un certain jeu, est placée dans un support (5) réalisé sous la forme d'un cylindre creux et traversant une ouverture (3) dans la paroi (1), support (5) qui, à l'intérieur du montage, peut tourner autour de son axe longitudinal et qui présente une rainure périphérique (11) sur sa surface cylindrique extérieure, la profondeur de cette rainure, mesurée dans deux parties diamétralement opposées, étant égale à l'épaisseur de la paroi du support (5) de façon à former dans la paroi du support deux ouvertures allongées (13) dont la direction longitudinale s'étend dans la direction périphérique, la surface extérieure de l'enveloppe tubulaire (7) présentant également une rainure périphérique (15) dont la position axiale, lors de l'utilisation, est coplanaire avec celle de la rainure périphérique (11) dans le support (5), un ressort sensiblement en U (17, 27) étant proportionné de façon que, dans sont état détendu, la distance entre les ailes est inférieure au diamètre de l'enveloppe tubulaire à l'endroit de la rainure périphérique (15) de l'enveloppe et étant fixé à la paroi (1) de façon que ces ailes sont situées dans la rainure périphérique (11) du support (5), de sorte que, dans une première direction de rotation du support (5), les ailes peuvent s'étendre le long des ouvertures allongées et à travers celles-ci, les ailes du ressort étant pressées dans la rainure périphérique (15) de l'enveloppe (7) et que, dans une autre direction de rotation, les ailes ne sont pas contiguës aux ouvertures allongées et ne s'engagent pas dans l'enveloppe tubulaire (7).

2. Montage selon la revendication 1, caractérisé en ce que le support (5) est muni d'une partie non circulaire (31) faisant saillie de la paroi (1).

**FIG.1**

**FIG.2**

**FIG.3**

**FIG.4**